# EUROPEAN PATENT APPLICATION

(11) **EP 3 404 407 A1**
(43) Date of publication of application: **21.11.2018**
(21) Application number: 17171422.3
(22) Date of filing: 16.05.2017
(51) Int. Cl.: G01N 27/447

(54) **DEVICE AND METHOD FOR CAPILLARY ELECTROPHORESIS**

(71) Applicant: Universität Basel, 4003 Basel (CH); ECyTech GmbH, 6130 Willisau (CH)
(72) Inventor: HAUSER, Peter C., 4106 Therwil (CH); SAIZ, Jorge, 28028 Madrid (ES); MAI, Than Duc, 92260 Fontenay aux Roses (FR); KOENKA, Israel Joel, 79588 Efringen-Kirchen (DE)
(74) Representative: Junghans, Claas

(57) **Abstract**

The invention relates to a capillary electrophoresis device, comprising a cartridge (5) for holding an electrophoresis capillary (24), a working electrode (8) and a ground electrode (9), wherein said cartridge (5) is arrangeable in a first configuration and a second configuration, wherein said working electrode (8) is conductively connected or connectable to a first end (7) of said electrophoresis capillary (24) and said ground electrode (9) is conductively connected or connectable to a second end (7) of said electrophoresis capillary (24) in said first configuration, and wherein said working electrode (8) is conductively connected or connectable to said second end (7) of said electrophoresis capillary (24), and said ground electrode (9) is conductively connected or connectable to said first end (7) of said electrophoresis capillary (24) in said second configuration.

The invention further relates to a capillary electrophoresis method using said capillary electrophoresis device.

## Description

The present invention relates to a capillary electrophoresis device, particularly having a simplified design, and a capillary electrophoresis method.

Capillary electrophoresis is a separation technique that employs high voltage as the driving force to separate charged species through a micro-bore channel. This allows elimination of expensive, complicated and sometimes irreplaceable high-pressure components as encountered in popularly recognized high-performance liquid chromatography (HPLC). With its advantageous properties of low power requirements, limited consumption of chemicals, ease of installation, operation and maintenance, high separation efficiency and short operation time, capillary electrophoresis is a particularly interesting technology for inexpensive and simple instrumentation.

Patent documents covering different aspects of capillary electrophoresis instrumentation focus on bench-top automated configurations. All patent documents cited herein are incorporated by reference. Examples include US 6001230 A to Beckman Instruments Inc., Patent No US 5,364,521, US 50119236 A, and US 5,131,997 to Hewlett-Packard Co., US 9,034,163 to Wang, and US 6,783,649 to Hedberg and Kangas, documents US 4985129 A and US 5164064 A to Bio-Rad Laboratories Inc., US 7,316,770 to Inaba and Sakai, US 6,780,300 to Sebia, US 5,085,757 to Northeastern University, US, US 5338427 A to Biometric Imaging Inc., US 2007278101 A1 and US 7,338,583 to Hitachi high Technologies Corp., US 7361259 to Goudberg and Kasai, US 6,383356 to the Institute of Physical and Chemical Research and Shimadzu Corp., US 2003102221 A1 to Ozawa and Kojima, US 6,936,152 to Kojima and Maeshima, US 7,156,971 to Furukawa and Sato, US 5045172 A to Princeton Biochemicals Inc., US 3941678 A to Shimadzu Corp., US 5302264 A to Scientronix Inc., US 5232565 A to University Leland Standford Junior, and US 5384024 A to Applied Biosystems. In these cases, a bi-polar high voltage module is used to create high voltages of either negative or positive polarity for respective analyses of anions and cations.

Other patent documents relate to novel features or designs of some specific part(s) of a capillary electrophoresis system. The injector (US 5217590 A to Lauer Lab B.V.), the capillary holder (US 5900132 A to Beckman Coulter Inc.), the asymmetric capillary cartridge (US 5198091 A to Beckman Instruments Inc., US 5269901 A to Bio-rad Laboratories Inc.) and the rotary tray for vial selection (US 5424037 A to Hewlett-Packard Company) are components that are frequently subject of innovation. A common capillary electrophoresis setup that has been widely practiced includes i) a rotary tray that contained capped vials, ii) a robotic arm that lifts the vial trays up and down, iii) a gas-based or syringe-based system for pressurization of the lifted vials for sample injection or capillary flushing and iv) an asymmetric cartridge that holds the capillary and the optical detector cell. The control of the temperature around the capillary during a capillary electrophoresis operation has been done via a thermostated chamber or coolant fluid. In all cases, the existing cartridges could not be spun/reversed and therefore either a bi-polar high voltage module or two single-polarity high voltage modules (negative and positive) are always needed for separations of both cationic and anionic species, increasing the total price of the system.

Based on the above mentioned state of the art, the objective of the present invention is to provide further improvements pertaining to capillary electrophoresis that help to make instrumentation in this field more readily available. This objective is attained by the subject matter of the independent claims, with dependent claims specifying further advantageous embodiments.

A first aspect of the invention relates to a capillary electrophoresis device comprising a cartridge for holding an electrophoresis capillary, a working electrode and a ground electrode, wherein the cartridge is arrangeable in a first configuration and a second configuration, and wherein the working electrode is conductively connected or connectable to a first end of the electrophoresis capillary and the ground electrode is conductively connected or connectable to a second end of the electrophoresis capillary in the first configuration, and wherein the working electrode is conductively connected or connectable to the second end of the electrophoresis capillary, and the ground electrode is conductively connected or connectable to the first end of the electrophoresis capillary in the second configuration. The device is designed such that a sample provided at an end of the electrophoresis capillary is electrophoretically separable by means of an electric field provided between the working electrode and the ground electrode.

Therein, the capillary electrophoresis device comprises exactly one working electrode. That is, the capillary electrophoresis comprises a unipolar electrode setup, wherein the single working electrode is operated at a positive or negative potential, particularly a positive potential, with respect to the ground electrode, which is at zero potential.

In particular, the working electrode is a high voltage electrode, which can be operated in the normal range of voltages used in capillary electrophoresis (1 to 30 kV).

Advantageously, due to its unipolar electrode design, the capillary electrophoresis device particularly comprises lower production costs and less weight compared to devices of the prior art.

In certain embodiments, the cartridge is rotatable by 180° between the first configuration and the second configuration with respect to a first longitudinal axis, along which the cartridge extends. In particular, the cartridge comprises a symmetrical design.

In certain embodiments, the capillary electrophoresis device comprises a cartridge holder comprising the working electrode and the ground electrode, wherein the cartridge is insertable into the cartridge holder in the first configuration and in the second configuration.

In certain embodiments, the capillary electrophoresis device comprises a detector for detecting a physical parameter, particularly a conductivity, of a sample in the electrophoresis capillary, wherein the detector is positioned near the second end of the electrophoresis capillary in the first configuration, and wherein the detector is positioned near the first end of the electrophoresis capillary in the second configuration. In particular, at least a part of the detector, more particularly a detector headstage, is fixed inside the cartridge.

In certain embodiments, the working electrode is conductively connected or connectable to the first end of the electrophoresis capillary by means of a first vial, and the ground electrode is conductively connected or connectable to the second end of the electrophoresis capillary by means of a second vial in the first configuration, wherein the working electrode is conductively connected or connectable to the second end of the electrophoresis capillary by means of a first vial, and the ground electrode is conductively connected or connectable to the first end of the electrophoresis capillary by means of a second vial in the second configuration.

In certain embodiments, the electrophoresis device comprises a pressure system, wherein the pressure system is adapted to provide a positive pressure at the first end of the electrophoresis capillary in the first configuration, and wherein the pressure system is adapted to provide a positive pressure at the second end of the electrophoresis capillary in the second configuration.

In certain embodiments, the cartridge holder comprises a first conduit and a second conduit, wherein the pressure system is in flow connection or adapted to be brought into flow connection with the first conduit and the second conduit, and wherein the first conduit is adapted to be brought into flow connection with the first vial, and wherein the second conduit is adapted to be brought into flow connection with the second vial.

In certain embodiments, the first conduit comprises a first opening and a second conduit comprises a second opening, wherein the working electrode protrudes through the first opening, and wherein the ground electrode protrudes through the second opening, and wherein the cartridge and the cartridge holder are adapted such that the first end of the electrophoresis capillary protrudes through the first opening and the second end of the electrophoresis capillary protrudes through the second opening in the first configuration, and wherein the cartridge and the cartridge holder are adapted such that the first end of the electrophoresis capillary protrudes through the second opening and the second end of the electrophoresis capillary protrudes through the first opening in the second configuration, and wherein the first opening and the second opening comprise respective seals, particularly rubber O-rings, wherein the seals are adapted to seal the flow connection between the first conduit and the first vial and the flow connection between the second conduit and the second vial.

In certain embodiments, the electrophoresis device comprises a thermostatic chamber, wherein the cartridge is positioned or positionable in the thermostatic chamber, and wherein the thermostatic chamber comprises a thermally insulating material, wherein particularly an inner wall or an outer wall of the thermostatic chamber is coated with the thermally insulating material.

In certain embodiments, the thermostatic chamber comprises a temperature control device for heating and/ or cooling the thermostatic chamber.

In certain embodiments, the thermostatic chamber comprises at least one fan for ventilating air in the thermostatic chamber.

In certain embodiments, the cartridge comprises a housing, which encloses an interior space, wherein the electrophoresis capillary is at least partially positioned or positionable in the interior space, and wherein the housing comprises a plurality of holes, wherein the interior space is in flow connection or adapted to be brought into flow connection with the thermostatic chamber by means of the holes.

In certain embodiments, the capillary electrophoresis device comprises a tray for holding a plurality of vials and an electromechanical mechanism for moving the tray, wherein the electromechanical mechanism is adapted to move the tray perpendicular to a second longitudinal axis of the electrophoresis device, wherein the second longitudinal axis is vertically positioned when the capillary electrophoresis device is in an operable condition, wherein particularly the electromechanical mechanism is adapted to move the tray in a horizontal direction.

In particular, the electromechanical mechanism is adapted to move the tray to the position where the respective vials are beneath the respective first and second capillary ends.

In certain embodiments, the electromechanical mechanism is adapted to move the tray in parallel to the second longitudinal axis, particularly in a vertical direction.

In particular, the electromechanical mechanism is adapted to raise the vial tray up until the vials are connected to the first and second conduits, particularly until the vial mouths are pressed against the o-rings in the cartridge holder creating a hermetic union.

A second aspect of the invention relates to a capillary electrophoresis method using a capillary electrophoresis device according to the first aspect of the invention, wherein an electrophoresis capillary is provided in the cartridge, and wherein, according to a first alternative, the cartridge is inserted into the capillary electrophoresis device in the first configuration, and wherein a sample is loaded into the first end of the electrophoresis capillary, and wherein a voltage is applied to the working electrode, and wherein cations in the sample are electrophoretically separated by means of the voltage, or according to a second alternative, the cartridge is inserted into the capillary electrophoresis device in the second configuration, wherein a sample is loaded into the second end of the electrophoresis capillary, and wherein a voltage is applied to the working electrode, and wherein anions in the sample are electrophoretically separated by means of the voltage.

In certain embodiments, in case the cartridge is inserted into the capillary electrophoresis device in the first configuration, a physical parameter of the sample is detected near the second end of the electrophoresis capillary.

In certain embodiments, in case the cartridge is inserted into the capillary electrophoresis device in the second configuration, a physical parameter of the sample is detected near the first end of the electrophoresis capillary.

In certain embodiments, a circular air flow is generated inside the cartridge to control the temperature of the electrophoresis capillary.

In certain embodiments, the method is used in the analysis of water, environmental samples, forensic samples, foods, and/ or drugs.

The present invention was made in view of the prior art described above and is directed to a capillary electrophoresis apparatus that reduces the number of needed components and, therefore, the production costs and weight.

To solve the problem, the capillary cartridge has a symmetrical design. It can therefore be turned 180 degrees, fitting in the cartridge holder in both ways. Only one single polarity (particularly positive) high voltage power supply is used, instead of two high voltage power supplies with different polarities or a dual-polarity high voltage power supply. This reduces construction costs and the weight of the system.

In particular, a 3-way valve allows the application of pressure to either end of the electrophoresis capillary, for simple injection and capillary flushing. The combination of these features allows performing separations of either anions or cations, employing a single polarity high voltage supply.

In particular, the cartridge holds and secures the detector headstage and the electrophoresis capillary. In particular, the cartridge is, in turn, fixed in a cartridge holder.

In particular, the cartridge holder securely holds it with clamps and also holds the electrodes (ground and high voltage) and has connections to the gas system.

In particular, the temperature of the electrophoresis capillary inside the cartridge is controlled by a thermostatic system. More particularly, it is located in a separated chamber and comprises a Peltier device, a thermometer, two heat sinks and two fans.

In particular, the thermostatic chamber and the cartridge create a circular shaped-compartment when the cartridge is attached in the cartridge holder and the flow of air is circular inside this compartment, which saves energy when the thermostatic system works, allowing its use with batteries when the system has to be operated in the field.

In particular, the vial selector comprises only two motors, for vertical and horizontal movements, unlike other vial selectors use more motors because the left and right vials are moved independently.

In particular, in this invention, left and right vials are moved together being selected in pairs, reducing construction costs, simplifying the use of the system for non-experienced users and reducing the weight of the system for portable applications. In particular, the horizontal movement is for the selection of the pair of vials and moves the vial tray back and forth.

In particular, the vertical movement presses the vial against the capillary holder and creates a hermetic sealing between the capillary holder and the vials, using rubber O-rings. When the vials are sealed, they can be pressurized and the solution in the vial can enter the electrophoresis capillary.

In particular, pressurization is achieved by opening different valves, allowing the pressurized air to flow towards the vials. The vials may be pressurized at two different pressures. In particular, a pressure of 20 mbar is used for sample injection, while 1 bar is used for capillary flushing. These pressures may be regulated by two different pressure regulators. For example, two solenoid valves may be used for the selection of pressure, and a third solenoid valve may be used to release the pressure inside the system.

In particular, the pressurized air source is a small gas cylinder, more particularly fitted with an air filter and a pressure sensor. In particular, it can be filled through a quick connector, by a bigger compressed air source (such as a bigger cylinder) or by a bicycle pump, which is useful in field conditions when the system is used as a portable instrument. The pressure sensor measures the pressure in order to alert the user when the pressure is too low. The system can be powered either by a power supply or batteries, and may be computer-controlled.

The reduction of the number of motors and the reduction of the number of high voltage power supplies needed or the change of its type, reduces the production costs and the size of the apparatus presented in this invention.

In particular, the apparatus is adapted to perform automated capillary electrophoresis of anions and cations having an autosampler, for example for six pairs of vials.

The simple design of the apparatus reduces production costs. The system uses a single polarity (particularly positive) voltage power supply, particularly high voltage power supply, for the creation of electric field and performing electrophoretic separations inside the electrophoresis capillary, particularly silica capillary.

In particular, the separation of anions and cations is possible by spinning round a reversible cartridge.

In particular, the apparatus comprises a pressure system which pressurizes the vials for cleaning and filling the electrophoresis capillary and for the injection of the sample.

In particular, the end of the electrophoresis capillary used for filling, cleaning and sample injection can be chosen by rotating a valve.

In particular, only two motors are used in the autosampler. Therein, one motor moves the vial tray horizontally for the selection of the pair of vials and the other motor moves the vial tray vertically to press the vials against the cartridge holder and creates a hermetic junction, making possible the pressurization of the vials.

In particular, a capacitively coupled contactless conductivity detector is used for the determination of the separated species inside the electrophoresis capillary.

In particular, the apparatus comprises a microcontroller allowing the automated and programmed operation of the system.

Subsequently, the invention is described in detail with reference to the following figures.

### Brief description of the Figures

- Figure 1: shows schematics for the system overview. Figure 1 A shows the external aspect of the capillary electrophoresis apparatus and Figure 1 B is a detailed overview showing the arrangement of the different components inside the system.
- Figure 2: shows different views of the symmetrical cartridge, which holds the electrophoresis capillary inside and the headstage of the detector.
- Figure 3: shows different views of the cartridge holder, where the cartridge shown in Figure 2 is attached, having connections to the positive high voltage supply, the ground and the gas system.
- Figure 4: shows a cross section of the cartridge shown in Figure 3 and the thermostatic chamber, with the needed components to control the temperature of the electrophoresis capillary, according to the invention.
- Figure 5: shows an arrangement of the vial selection mechanism with vertical and horizontal motors and the vial tray.
- Figure 6: shows the pressure system with the components used, according to the invention.

### Detailed description of the figures

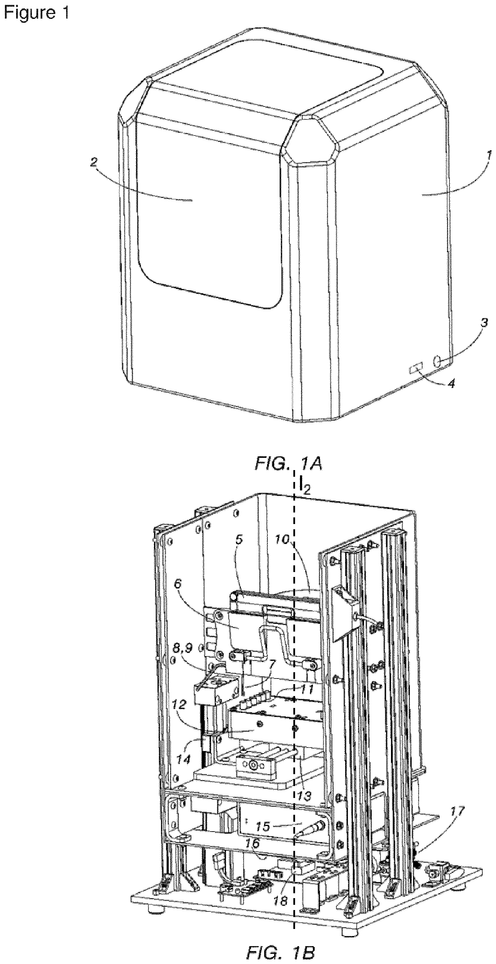

Figure 1 A shows the external aspect of the capillary electrophoretic apparatus with an external casing 1, a door 2, which can be opened to access the vial area, the electrical connection 3 for powering and the USB computer connection 4 for the system control and data recording.

Figure 1 B depicts all the components inside the system. The cartridge 5 is inserted in the cartridge holder 6 in accordance with the invention. The capillary ends 7 protrude outside the holder, parallel to the working electrode 8, particularly high voltage electrode, and the ground electrode 9. The thermostatic chamber 10 is attached to the cartridge holder 6. The vials 11 are placed in the vial tray 12, which is attached to an electromechanical mechanism for the horizontal movement 13. The ensemble of the vial tray 12 and the mechanism for the horizontal movement 13 is attached to another electromechanical mechanism for the vertical movement 14. Figure 1 B also shows the capacitatively coupled contactless conductivity (C⁴D) detector 15, the positive high voltage supply 16, the pressure system 17 and the electronics 18 needed for system control.

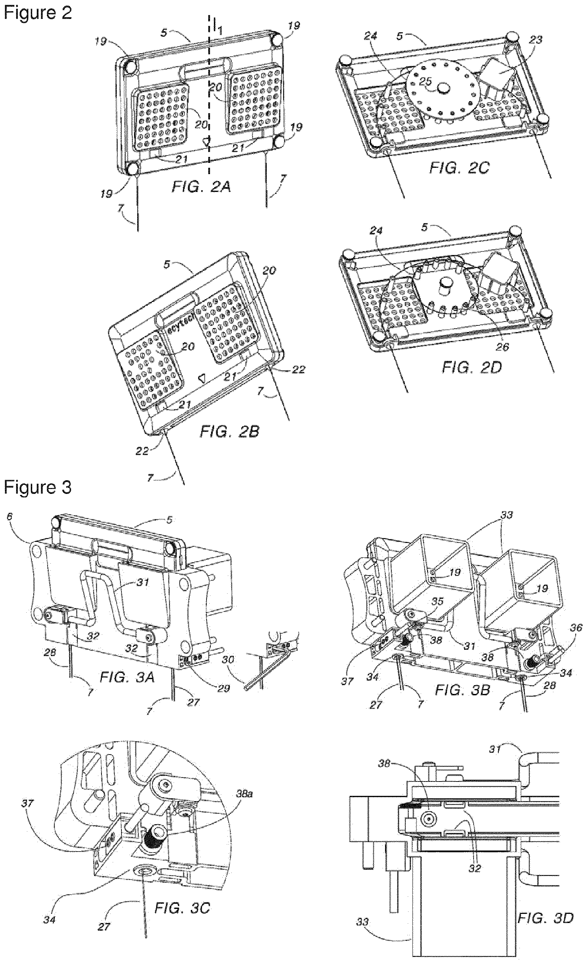

Figure 2 is a schematic for the cartridge 5. The cartridge 5 described here is completely symmetric. Therefore, this cartridge 5 can be spun, being able to be placed in the cartridge holder 6 in two positions. This allows the separation of cations and anions with a single polarity high voltage supply, which differs from capillary electrophoresis systems of the prior art, since all the previously protected designs and commercial systems from the companies use either a double polarity high voltage supply or two high voltage supplies of different polarities. This feature importantly reduces the production costs and weight, compared to other available systems.

Figure 2A shows the back view of the assembled cartridge 5. The two halves of the cartridge are fastened with four screws 19, which can be screwed/unscrewed easily with one finger and are placed in the back side of the cartridge 5. There are two zones with holes for ventilation 20, which are directly connected to the thermostatic chamber 10 when the cartridge 5 is clamped, in the holes for clamping 21. The rest of the inner surface of the cartridge 5 is coated with a thermic isolating material. The capillary ends 7 come out from the bottom part of the cartridge 5.

Figure 2B shows a front view of the cartridge 5. This side has also ventilation holes 20 and clamping holes 21. This view also shows the rubber seals 22 used to hold the capillary ends 7 in place and to create a hermetic union with the cartridge 5.

Figure 2C is a schematic of an opened cartridge 5. This view shows the detector headstage 23, which is fixed inside the cartridge 5 and the electrophoresis capillary 24 passes through it. A plastic disk with a screw holds the electrophoresis capillary 24 in place. The combination of the rubber seals 22 and the plastic disc 25 prevents the electrophoresis capillary 24 from losing the correct position. Figure 2D also shows an opened cartridge 5 in which the plastic disc 25 has been removed showing the plastic bars 26 used to guide the path of the electrophoresis capillary 24.

Figure 3 depicts a drawing of the cartridge holder 6. The cartridge holder 6 has also a symmetric inner volume, where the cartridge 5 can be placed. This allows positioning the cartridge 5 in the two positions mentioned above, which will have a direct effect in the reduction of the production costs of this system, as it has been explained.

Figure 3A is the front view of the cartridge holder 6 with the cartridge 5 attached in its inside. The cartridge holder 6 is fixed to the system with screws 27,28. The capillary ends 7 come out from the bottom of the cartridge holder 6, parallel to the working electrode 8, particularly high voltage electrode and the ground electrode 9. The electrodes 8,9 are fixed with hex screws 29 and can be unmounted for replacement/cleaning with a hex key 30. This approach for holding the electrodes is very simple. Other products of the prior art are complex, using several parts in their design, such as punching needles or tube electrodes throughout which the electrophoresis capillary 24 passes. Adding complexity to these pieces might be unnecessary in certain designs and only increases the production and replacement cost. The design presented in this specification is as simple as it only uses a metallic rod, acting as electrode, and a screw to fix it. The construction costs are thereby reduced.

The cartridge holder 6 has two aluminum handles 31, each of them attached to two plastic clamps 32. These clamps 32 fix automatically the cartridge 5 in the clamping holes 21 when it is introduced and pushed down into the cartridge holder 6. The aluminum handles 31 can be separated with two fingers, which separate the clamps 32 from the clamping holes 21 and release the cartridge 5 with a small bounce. This procedure is a fast and easy gesture of one hand, since the cartridge 5 bounces and is not fixed again unless it is pushed down back. Other devices of the prior art use screws to attach the capillary cartridge to the system, which takes longer times to mount and dismount it and forces the user to use two hands, one to hold the cartridge and the other one to manipulate the screws.

Figure 3B represents the back view of the cartridge holder 6. This side of the cartridge holder 6 has the transfer lines 33 to the thermostatic chamber 10, which connects directly to the zones with ventilation holes 20 in the cartridge 5. In this way, the inside of the cartridge 5 is coupled to the thermostatic chamber 10. The same zone in the front side of the cartridge holder 6 blocks the ventilation holes 20 in the other half of the cartridge 5, preventing thermostated air to escape and forcing it to stay in the inner volume created by the cartridge 5, the transfer lines 33 and the thermostatic chamber 10.

Figure 3B also shows the second aluminum handle 31. At the bottom of the cartridge holder 6 there are two rubber o-rings 34, throughout which the capillary ends 7 and the working electrode 8, particularly high voltage electrode, and the ground electrode 9 pass. The high voltage cable 35 and the ground cable 36 are connected from the back side of the cartridge holder 6 and are properly attached with two pairs of screws 37. In the back side of the cartridge holder 6 there are also two fittings 38a for the connection to the pressure system 17. These connections are depicted in detail in Figure 3C.

Figure 3D depicts half of the cartridge holder 6 viewed from above. This view shows the clamps 32 from the inside of the cartridge holder 6. There is also a receptacle 38, particularly a conically shaped receptacle, in the holder which guides the capillary ends 7 when the cartridge 5 is inserted, preventing the electrophoresis capillary 24 to break due to a bad positioning. When the cartridge 5 is pressed down, the receptacle 38 compresses the rubber seals 22 against the capillary ends 7, resulting in a hermetic union and in the small bounce when the cartridge 5 is unclamped.

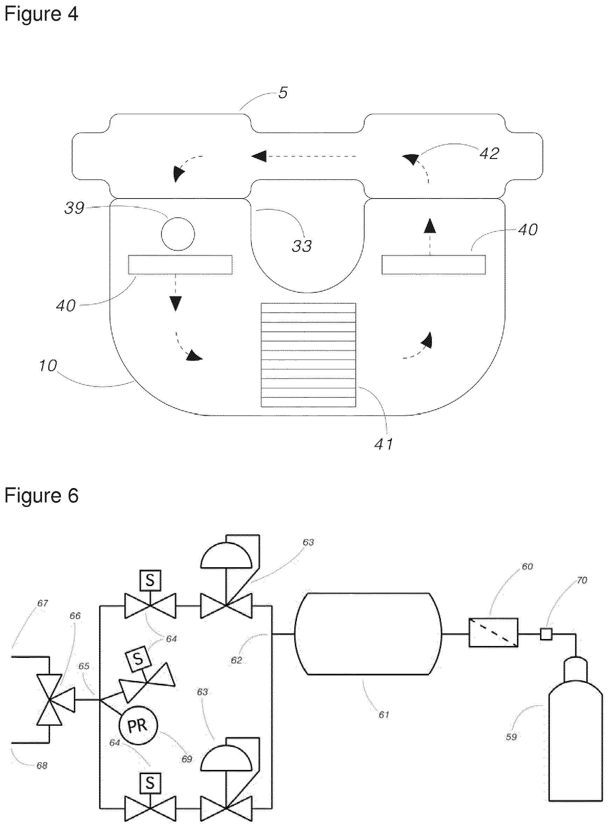

Figure 4 is a schematic for the thermostatic system, which involves the thermostatic chamber 10 and the cartridge 5. The thermostatic chamber 10 has different components: a thermometer 39, two fans 40 and a Peltier device 41 with two heat sinks. The two fans 40 are oriented in opposite directions. The right fan 40 faces to the cartridge 5 and introduces air into it. The left fan 40 faces the inside of the thermostatic chamber 10 and creates a flow towards the Peltier device 41. When the cartridge 5 is placed into the cartridge holder 6, a single circular-shaped chamber is created. The two fans 40 create a circular flow of air 42 inside this chamber. When the air comes out of the cartridge 5, a thermometer 39 reads the temperature of the air inside it. This value of temperature is used to evaluate if the temperature is correct or needs to be modified. A signal is sent to the Peltier device 41 to increase, decrease or maintain the temperature while the left fan 40 pushes the air from the cartridge 5 to the Peltier device 41. The Peltier device 41 modifies the air temperature by heating up or cooling down its body. The heat sinks attached to the Peltier device 41 increase the velocity of heat transfer in order to change the air temperature quickly. The right fan 40 pushes then the air back into the cartridge 5, having then a stable temperature of the electrophoresis capillary 24 inside the cartridge 5 for good quality separations.

The circular shape of the thermostatic system allows to re-use the thermostated air instead of thermostatting new air coming from the outside. This drastically reduces the power consumption of the thermostatic system, which might be one of the most power-consuming parts in a system operated in cold/hot environments, because the Peltier device 41 needs to work continuously. Moreover, since the inner volume of the thermostatic system is reduced to the minimum, the power consumption of this system is even further reduced. As mentioned above, the inner surface of the electrophoresis capillary 24 is coated with a thermic isolating material. The inner surface of the thermostatic chamber 10 and the transfer lines 33 are also coated with this material. This also reduces heat transfer, decreasing significantly the energy needed to control the temperature by the thermostatic system.

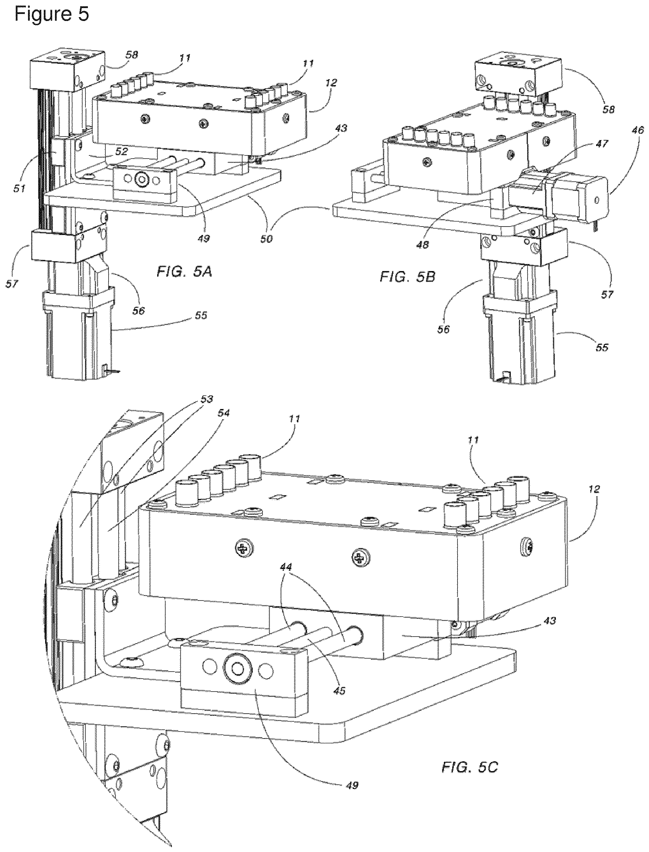

Figure 5 illustrates the mechanisms for the vial selection (vertical and horizontal movements).

Figure 5A is a front view of the mechanism, Figure 5B is a back view and Figure 5C is a detail of the front view. The vials 11 are held in the vial tray 12. As it is shown in Figure 5C, the vial tray 12 is attached to a horizontal platform 43, which moves along two horizontal guides 44. This movement is achieved by a rotation of a horizontal leadscrew 45 by the horizontal motor 46. (Figure 5B). The horizontal leadscrew 45 is coupled to the motor by a horizontal coupler 47. The range of movement of the horizontal platform 43 is defined by an initial stopper 48 and a final stopper 49. These stoppers attach the whole mechanism for the horizontal movement to a plastic platform 50, which in turn is attached to a vertical platform 51 by two framing squares 52. The vertical platform 51 moves up and down along two vertical guides 53 by the rotation of a vertical leadscrew 54, as seen in Figure 5C, which is also driven by a vertical motor 55. The vertical leadscrew 54 is connected to the vertical motor 55 with a vertical coupler 56 and there is also an initial vertical stopper 57 and a final vertical stopper 58.

The mechanism for the computer-controlled vial selection works as follows: first, the horizontal motor 46 moves the vial tray 12 to the position where the selected pair of vials 11 are beneath the capillary ends 7. Then the vertical motor 55 raises the vial tray 12 up until the vial mouths are pressed against the o-rings 34 in the capillary holder 6 creating a hermetic union. According to this invention, the system only uses two motors for the vial selection. Other inventions use three motors or more. In other cases, one motor is used to rotate a carrousel holding the vials. Then two extra motors are used to lift the right and left vials. In another device of the prior art two pairs of two motors each move left/right and front/back two independent trays, which hold the inlet and outlet vials. A fifth motor moves the tray up and down to immerse the electrodes and the capillary ends into the selected vials. Reducing the number of motors used for the vial selection is an important step for reducing the construction costs. Moreover, since less electromechanical components are involved, the system is more robust and last longer, reducing the number of failing components. Furthermore, since motors are heavy parts in a system of these characteristics, by reducing their number the total weight of the system is also reduced, being more suitable for portable applications.

Figure 6 is a schematic of the pressure system 17. The pressure source 59 might be a gas tank or a bicycle pump. There is an air filter 60 at the beginning of the system which filters the air before it is stored in gas cylinder 61. A diverter tee 62 distributes the pressurized air towards two pressure regulators 63. One pressure regulator 63 is set to a fixed pressure for injection (20 mbar), while the other one is set to a fixed pressure for flushing and filling operations (1 bar). Two solenoid valves 64 control the flow of the pressurized air at the two pressures mentioned above letting air flow towards a five-way manifold 65. This manifold 65 collects the air from the pressure regulators 63 and connects to a three-way valve 66. This valve 66 is connected to two flexible tubes that go to the high voltage end of the capillary 67 and to the ground end of the capillary 68. The valves 66 allow to select the end of the electrophoresis capillary 24 were the pressure for injection and flushing is applied. The five-way manifold 65 is also connected to a third valve 64, which is used for pressure release. The manifold 65 is also connected to the pressure sensor 69, which measures the pressure in the system and alerts when the user needs to refill it. The system can be plugged/unplugged easily and quickly to/from the pressure source (gas tank or bicycle pump) with a quick connector 70. The system pressure described in this invention has a key importance for the reduction of the power consumption and for the portability of the system.

By allowing to refill the system with a bicycle pump, the system can be used in places where there is not access to pressurized gas supplies, such as analysis in the field. Moreover, the system can be filled in the laboratory with a gas tank and moved then to the analysis site, since the quick connector holds the pressure inside the system. The pressurized gas contained allows to work with the system for, at least, one complete day. Furthermore, by avoiding the use of pumps for pressure generation, the power consumption of the system is drastically reduced, being able to work for longer periods when it is operated with batteries.

### Examples

Hereinafter, the present invention is described in more detail and specifically with reference to the Examples, which however are not intended to limit the present invention.

### Example 1: Normal separation of cations

A normal operation of this apparatus for performing a normal capillary electrophoresis of cations would be as follows:
First, the pressure system 17 has to be pressurized with air and the three-way valve 66 is operated in a way that lets the air flow towards the high voltage side of the system 8,67. The vials 11 are placed in the vial tray 12: a first pair of vials 11 for flushing/cleaning (with an empty vial 11 at the ground side and one with separation buffer at the high voltage side), a second pair of vials 11 for sample injection (with an empty vial 11 at the ground end and the vial 11 with sample at the high voltage end) and a third pair of vials 11 for separation (both with separation buffer at the ground side and the high voltage side). The electrophoresis capillary 24 is placed inside the cartridge 5 and this is clamped in the cartridge holder 6 with the detector headstage 23 close to the ground end of the capillary 9. The system is now ready to operate the computer-controlled sequence of analysis. The mechanism for the horizontal movement 13 will place the first pair of vials beneath the electrodes 8,9 and the capillary ends 7. The mechanism for the vertical movement 14 will push this pair of vials against the rubber o-rings 34 in the cartridge holder 6 creating a hermetic sealing. The valve 64 controlling the flow of air pressurized at 1 bar will let the air flow towards the high voltage end of the electrophoresis capillary 24, pressurizing the vials 11 with buffer and forcing it to penetrate into the electrophoresis capillary 24 towards the empty vial 11 in the ground end to the electrophoresis capillary 24.

When the electrophoresis capillary 24 is filled/cleaned after a certain time, the valve 63 controlling the air flow will close and the one for releasing the pressure in the system 63 will open. The vial selector will select the second pair of vials 11, for the sample injection, and the injection of the sample will be performed by letting the air pressurized at 20 mbar to flow towards the high voltage end. The injection will be performed for a specific time as it has been described above for the filling/cleaning operation. Finally, the vial selector will select the third pair of vials 11 for the electrophoretic separation. This time, no pressure is needed and the high voltage power supply 16 will create an electric field which will force the cations to be separated according to their electrophoretic mobilities and will be detected while they pass through the detector headstage 23.

### Example 2: Normal separation of anions

A normal operation of this apparatus for performing a normal capillary electrophoresis of anions would be as follows:
The procedure is basically the same as for the separation of cations. There is only need to spin the cartridge 5 so the detector headstage 23 is now close to the ground electrode 9 and to turn the three-way valve 66 in the way that it lets the air flow towards the ground end of the electrophoresis capillary 24. In this way, all the injection and filling/cleaning processes will be done from the ground end of the electrophoresis capillary 24 and, during the separation, the analytes will move from this end to the high voltage end, passing eventually through the detector headstage 23.

Furthermore, the invention is described by the following items:
Item 1: An apparatus for performing capillary electrophoresis comprising:
   a) a cartridge (5) holding the electrophoresis capillary (24) and the headstage detector (23);
   b) a cartridge holder (6), where the cartridge (5) is clamped, having two electrodes (8,9), two rubber o-rings (34), connections to the positive high voltage supply (35) and ground (36) and pressurized air inputs (38a);
   c) a thermostatic chamber (10) coated with isolating material, with a Peltier device with heat sinks (41), a thermometer (39) and two fans (40),
   d) an electromechanical mechanism for the selection of the vials in pars (11) with two motors, for horizontal (46) and vertical (55) movements;
   e) a tray (12) for six pairs of vials (11);
   f) a pressure system (17) with a gas cylinder (61), an air filter (60), pressure regulators (63), a pressure sensor (69), three solenoid valves (63), and a quick connector (70).
Item 2: An apparatus as in item 1, with a cartridge (5) which is symmetrical, with two halves that can be opened and closed by hand by rotating four screws (19).
Item 3: An apparatus as in item 1 or 2, with a cartridge (5) with holes for ventilation (20) and clamping (21).
Item 4: An apparatus as in any of the preceding items, with a cartridge (5) with isolating material in the inner surfaces.
Item 5: An apparatus as in any of the preceding items, with a cartridge (5) with conical rubber seals (22) with holes throughout which the capillary ends (7) protrude.
Item 6: An apparatus as in item 1, with a cartridge holder (6) having a symmetrical inner design, where the cartridge (5) can be inserted in a reversible way.
Item 7: An apparatus as in item 1 and 6, with a cartridge holder (6) that is automatically fixed with clamps (32) when it is pressed down.
Item 8: An apparatus as in item 1, 6 or 7, with a cartridge holder (6) with two handles (31) that can be separated with two fingers for automatically unfix the cartridge (5). Item 9: An apparatus as in item 1 or 3, with a thermostatic chamber (10) that connects to the inside of the cartridge (5) through ventilation holes (20) and create a closed chamber where the air flows in a circular way (42), when the cartridge (5) is clamped.
Item 10: An apparatus as in item 1, with a mechanism for the movement of a vial tray (12) and the selection of pairs the vials (11).
Item 11: An apparatus as in item 1 or 10, with a motor (46) for the horizontal movement of the vial tray (12).
Item 12: An apparatus as in item 1 or 10, with a motor (55) for the vertical movement of the vial tray (12) together with the motor for the horizontal movement (46), that creates a hermetic seal by pressing the vial mouths against the rubber o-rings (34).
Item 13: An apparatus as in item 1 with a pressure system (17) that supplies pressurized air to the vials (11) throughout the cartridge holder (6).
Item 14: An apparatus as in any of the previous claims for its use in the analysis of waters, environmental samples, forensic samples, foods, drugs and other samples, in which the use of a simplified capillary electrophoresis is needed.

### List of reference signs

- 1: external casing
- 2: door
- 3: electrical connection
- 4: computer connection
- 5: cartridge, particularly capillary cartridge
- 6: cartridge holder
- 7: capillary ends
- 8: working electrode, particularly high voltage electrode
- 9: ground electrode
- 10: thermostatic chamber
- 11: vial
- 12: vial tray
- 13: mechanism for the horizontal movement
- 14: mechanism for the vertical movement
- 15: capacitatively coupled contactless conductivity detector (C⁴D)
- 16: High voltage supply
- 17: pressure system
- 18: electronics
- 19: screw
- 20: holes for ventilation
- 21: holes for clamping
- 22: rubber seals
- 23: detector, particularly detector headstage
- 24: electrophoresis capillary
- 25: plastic dis,
- 26: plastic bars
- 27, 28: screws of the cartridge holder
- 29: hex screws
- 30: hex key
- 31: aluminium handles
- 32: plastic clamps
- 33: transfer lines
- 34: seal, particularly o-ring
- 35: high voltage cable
- 36: ground cable
- 37: two pairs of screws
- 38: receptacle
- 38a: fittings
- 39: thermometer
- 40: fans
- 41: Peltier device with two heat sinks
- 42: circular flow of air
- 43: horizontal platform
- 44: horizontal guides
- 45: horizontal leadscrew
- 46: horizontal motor
- 47: horizontal coupler
- 48: initial horizontal stopper
- 49: final horizontal stopper
- 50: plastic platform
- 51: vertical platform
- 52: framing squares
- 53: vertical guides
- 54: vertical leadscrew
- 55: vertical motor
- 56: vertical coupler
- 57: initial vertical stopper
- 58: final vertical stopper
- 59: pressure source
- 60: air filter
- 61: gas cylinder
- 62: tee
- 63: pressure regulator
- 64: valves
- 65: manifold
- 66: 3-way valve
- 67: tube to the high voltage end
- 68: tube to the ground end
- 69: pressure sensor
- 70: quick connector
- I₁: first longitudinal axis
- I₂: second longitudinal axis

## Claims

1. A capillary electrophoresis device, comprising:
- a cartridge (5) for holding an electrophoresis capillary (24),
- a working electrode (8) and a ground electrode (9),
**characterized in that**
said cartridge (5) is arrangeable in a first configuration and a second configuration, wherein
- said working electrode (8) is conductively connected or connectable to a first end (7) of said electrophoresis capillary (24) and said ground electrode (9) is conductively connected or connectable to a second end (7) of said electrophoresis capillary (24) in said first configuration, and wherein
- said working electrode (8) is conductively connected or connectable to said second end (7) of said electrophoresis capillary (24), and said ground electrode (9) is conductively connected or connectable to said first end (7) of said electrophoresis capillary (24) in said second configuration.

2. The capillary electrophoresis device according to claim 1, **characterized in that** said cartridge (5) is rotatable by 180° between said first configuration and said second configuration with respect to a first longitudinal axis (I₁), along which said cartridge (5) extends.

3. The capillary electrophoresis device according to claim 1 or 2, **characterized in that** said capillary electrophoresis device comprises a cartridge holder (6) comprising said working electrode (8) and said ground electrode (9), wherein said cartridge (5) is insertable into said cartridge holder (6) in said first configuration and in said second configuration.

4. The capillary electrophoresis device according to any one of the claims 1 to 3, **characterized in that** said capillary electrophoresis device comprises a detector (23) for detecting a physical parameter of a sample in said electrophoresis capillary (24), wherein said detector (23) is positioned near said second end (7) of said electrophoresis capillary (24) in said first configuration, and wherein said detector (23) is positioned near said first end (7) of said electrophoresis capillary (24) in said second configuration.

5. The capillary electrophoresis device according to any one of the preceding claims, **characterized in that** said working electrode (8) is conductively connected or connectable to said first end (7) of said electrophoresis capillary (24) by means of a first vial (11), and said ground electrode (9) is conductively connected or connectable to said second end (7) of said electrophoresis capillary (24) by means of a second vial (11) in said first configuration, and wherein said working electrode (8) is conductively connected or connectable to said second end (7) of said electrophoresis capillary (24) by means of a first vial (11), and said ground electrode (9) is conductively connected or connectable to said first end (7) of said electrophoresis capillary (24) by means of a second vial (11) in said second configuration.

6. The capillary electrophoresis device according to any one of the preceding claims, **characterized in that** said electrophoresis device comprises a pressure system (17), wherein said pressure system (17) is adapted to provide a positive pressure (17) at said first end (7) of said electrophoresis capillary (24) in said first configuration, and wherein said pressure system (17) is adapted to provide a positive pressure at said second end (7) of said electrophoresis capillary (24) in said second configuration.

7. The capillary electrophoresis device according to claim 6, **characterized in that** said cartridge holder (6) comprises a first conduit and a second conduit, wherein said pressure system (17) is in flow connection or adapted to be brought into flow connection with said first conduit and said second conduit, and wherein said first conduit is adapted to be brought into flow connection with said first vial (11), and wherein said second conduit is adapted to be brought into flow connection with said second vial (11).

8. The capillary electrophoresis device according to claim 7, **characterized in that** said first conduit comprises a first opening and a second conduit comprises a second opening, wherein said working electrode (8) protrudes through said first opening, and wherein said ground electrode (9) protrudes through said second opening, and wherein said cartridge (5) and said cartridge holder (6) are adapted such that said first end (7) of said electrophoresis capillary (24) protrudes through said first opening and said second end (7) of said electrophoresis capillary (24) protrudes through said second opening in said first configuration, and wherein said cartridge (5) and said cartridge holder (6) are adapted such that said first end (7) of said electrophoresis capillary (24) protrudes through said second opening and said second end (7) of said electrophoresis capillary (24) protrudes through said first opening in said second configuration, and wherein said first opening and said second opening comprise respective seals (34), wherein said seals (34) are adapted to seal said flow connection between said first conduit and said first vial (11) and said flow connection between said second conduit and said second vial (11).

9. The capillary electrophoresis device according to any one of the preceding claims, **characterized in that** said electrophoresis device comprises a thermostatic chamber (10), wherein said cartridge (5) is positioned or positionable in said thermostatic chamber (10), and wherein said thermostatic chamber (10) comprises a thermally insulating material, wherein particularly an inner wall or an outer wall of said thermostatic chamber (10) is coated with said thermally insulating material.

10. The capillary electrophoresis device according to claim 9, **characterized in that** said thermostatic chamber (10) comprises a temperature control device for heating and/ or cooling said thermostatic chamber (10).

11. The capillary electrophoresis device according to claim 9 or 10, **characterized in that** said thermostatic chamber (10) comprises at least one fan (40) for ventilating air in said thermostatic chamber (10).

12. The capillary electrophoresis device according to any one of the claims 9 to 11, **characterized in that** said cartridge (5) comprises a housing, which encloses an interior space, wherein said electrophoresis capillary (24) is at least partially positioned or positionable in said interior space, and wherein said housing comprises a plurality of holes (20), wherein said interior space is in flow connection or adapted to be brought into flow connection with said thermostatic chamber (10) by means of said holes (20).

13. The capillary electrophoresis device according to any one of the preceding claims, **characterized in that** said capillary electrophoresis device comprises a tray (12) for holding a plurality of vials (11) and an electromechanical mechanism (13,14) for moving said tray (12), wherein said electromechanical mechanism (13,14) is adapted to move said tray (12) perpendicular to a second longitudinal axis (I₂) of said electrophoresis device, wherein said second longitudinal axis (I₂) is vertically positioned when said capillary electrophoresis device is in an operable condition, wherein particularly said electromechanical mechanism (13,14) is adapted to move said tray (12) in a horizontal direction.

14. The capillary electrophoresis device according to claim 13, **characterized in that** said electromechanical mechanism (13,14) is adapted to move said tray (12) in parallel to said second longitudinal axis (I₂), particularly in a vertical direction.

15. A capillary electrophoresis method using a capillary electrophoresis device according to any one of the claims 1 to 14, wherein an electrophoresis capillary (24) is provided in said cartridge (5), and wherein
- said cartridge (5) is inserted into said capillary electrophoresis device in said first configuration, and wherein a sample is loaded into said first end (7) of said electrophoresis capillary (24), and wherein a voltage is applied to said working electrode (8), and wherein cations in said sample are electrophoretically separated by means of said voltage, or
- said cartridge (5) is inserted into said capillary electrophoresis device in said second configuration, and wherein a sample is loaded into said second end (7) of said electrophoresis capillary (24), and wherein a voltage is applied to said working electrode (8), and wherein anions in said sample are electrophoretically separated by means of said voltage.
